# EUROPÄISCHE PATENTSCHRIFT

(11) **EP 2 144 959 B1**
(45) Veröffentlichungstag und Bekanntmachung des Hinweises auf die Patenterteilung: **05.01.2011**
(21) Anmeldenummer: 08735092.2
(22) Anmeldetag: 08.04.2008
(51) Int. Cl.: C08J 9/00, C08J 9/16, C08J 9/18

(54) **ELASTISCHER PARTIKELSCHAUMSTOFF AUF BASIS VON POLYOLEFIN/STYROLPOLYMER-MISCHUNGEN**
ELASTIC PARTICLE FOAM BASED ON POLYOLEFIN/STYRENE POLYMER MIXTURES
MOUSSE PARTICULAIRE ÉLASTIQUE À BASE DE MÉLANGES DE POLYOLÉFINES/POLYMÈRES STYRÉNIQUES

(30) Priorität: 11.04.2007 EP 07105953
(43) Veröffentlichungstag der Anmeldung: 20.01.2010
(73) Patentinhaber: BASF SE, 67056 Ludwigshafen (DE)
(72) Erfinder: SCHIPS, Carsten, 67342 Speyer (DE); HAHN, Klaus, 67281 Kirchheim (DE); GRÄSSEL, Georg, 67063 Ludwigshafen (DE); LONGO, Daniela, 53721 Siegburg (DE); ASSMANN, Jens, 68165 Mannheim (DE); GIETL, Andreas, 68165 Mannheim (DE)
(86) Internationale Anmeldenummer: PCT/EP2008/002774
(87) Internationale Veröffentlichungsnummer: WO 2008/125250

(56) Entgegenhaltungen:
- EP-A- 0 682 079
- WO-A-02/14424
- WO-A-2005/056652
- WO-A-2005/092959

## Beschreibung

Die Erfindung betrifft thermoplastische Partikelschaumstoffe mit Zellen einer mittleren Zellgröße im Bereich von 20 bis 500 µm, in denen die Zellmembranen eine nanozellulären oder faserförmigen Struktur mit Poren- bzw. Faserdurchmesser unter 1500 nm aufweisen, sowie Verfahren zu ihrer Herstellung.

Expandierbare Polymermischungen aus Styrolpolymeren, Polyolefinen und gegebenenfalls Lösungsvermittlern, wie hydrierte Styrol-Butadien-Blockcopolymeren, sind beispielsweise aus DE 24 13 375, DE 24 13 408 oder DE 38 14 783 bekannt. Die daraus erhältlichen Schaumstoffe sollen gegenüber Schaumstoffen aus Styrolpolymeren bessere mechanischen Eigenschaften, insbesondere eine bessere Elastizität und eine geringere Sprödigkeit bei tiefen Temperaturen, sowie eine Unempfindlichkeit gegenüber Lösungsmitteln, wie Essigester und Toluol, aufweisen. Das Treibmittelhaltevermögen und die Verschäumbarkeit der expandierbaren Polymermischungen zu niedrigen Dichten sind für die Verarbeitung jedoch nicht ausreichend.

Die WO 2005/056652 beschreibt Partikelschaumstoffformteile mit einer Dichte im Bereich von 10 bis 100 g/l, die durch Verschweißen von vorgeschäumten Schaumpartikeln aus expandierbaren, thermoplastischen Polymergranulaten erhältlich sind. Die Polymergranulate enthalten Mischungen aus Styrolpolymeren und anderen thermoplastischen Polymeren und können durch Schmeizeimprägnierung und anschließender Druckunterwassergranulierung erhalten werden.

Des Weiteren sind elastische Partikelschaumstoffe aus expandierbaren Interpolymerpartikeln bekannt (z. B. US 2004/0152795 A1). Die Interpolymeren sind durch Polymerisation von Styrol in Gegenwart von Polyolefinen in wässriger Suspension erhältlich und bilden ein Interpenetrierendes Netzwerk aus Styropolymeren und Olefinpolymeren. Aus den expandierbaren Polymerpartikeln diffundiert das Treibmittel jedoch schnell heraus, so dass sie bei tiefen Temperaturen gelagert werden müssen und nur eine kurze Zeit eine ausreichende Verschäumbarkeit aufweisen.

Die WO 2005/092959 beschreibt nanoporöse Polymerschaumstoffe, die aus treibmittelhaltigen, mehrphasigen Polymermischungen mit Domänen im Bereich von 5 bis 200 nm erhältlich sind. Bevorzugt bestehen die Domänen aus einem durch Emulsionspolymerisation erhältlichen Kern-Schale-Teilchen, in denen die Löslichkeit des Treibmittels mindestens doppelt so hoch ist, als in den angrenzenden Phasen.

Aufgabe der vorliegenden Erfindung war es, expandierbare, thermoplastische Polymerpartikel mit geringem Treibmittelverlust und hohem Expansionsvermögen bereitzustellen, die zu Partikelschaumstoffen mit hoher Steifigkeit und gleichzeitig guter Elastizität verarbeitbar sind, sowie ein Verfahren zu deren Herstellung.

Demgemäß wurden die oben beschriebenen thermoplastischen Partikelschaumstoffe gefunden.

Die thermoplastischen Partikelschaumstoffe weisen bevorzugt Zellen einer mittleren Zellgröße im Bereich von 50 bis 250 µm und eine nanozelluläre Struktur oder eine faserförmig verstreckte, disperse Phasenstruktur in den Zellwänden der thermoplastischen Partikelschaumstoffe mit einem mittleren Poren- bzw- Faserdurchmesser im Bereich von 10 bis 1000 nm, besonders bevorzugt im Bereich von 100 bis 500 nm auf.

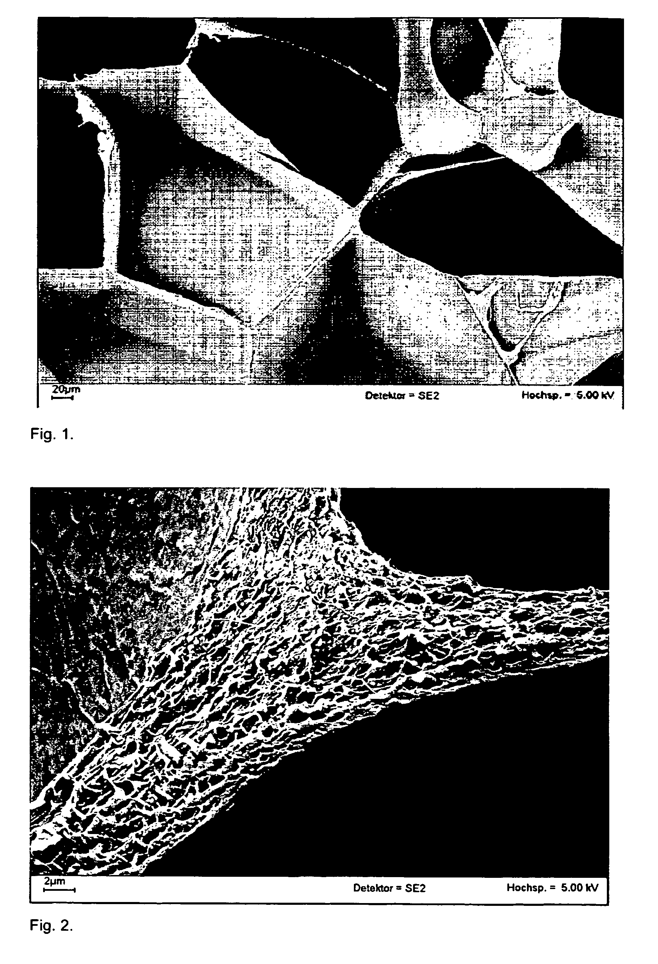

In der transmissionselektronenmikroskopischen Aufnahme (TEM) ist die Zellstruktur mit nanozellulären Zellwänden und Stegen zu erkennen. Figur 1 zeigt einen Schnitt durch die Zellen eines erfindungsgemäßen thermoplastischen Partikelschaumstoffes. Figur 2 zeigt einen 10-fach vergrößerten Ausschnitt aus der in Figur 1 gezeigten Zellstruktur mit einer nanozellulären Zellwand.

Die Polymermatrix der thermoplastischen Partikelschaumstoffe bestehen bevorzugt aus einer kontinuierlichen, Styrolpolymer-reichen Phase und eine dispersen Polyolefin-reichen Phase.

Besonders bevorzugt enthalten die thermoplastischen Partikelschaumstoffen eine Polymermatrix aus
A) 45 bis 98,9 Gew.-%, insbesondere 55 bis 89,9 Gew.-% eines Styrolpolymeren, insbesondere Polystyrol,
B) 1 bis 45 Gew.-%, insbesondere 4 bis 37 Gew.-% eines Polyolefins, insbesondere Polyethylen und
C) 0,1 bis 10 Gew.-%, insbesondere 3 bis 8 Gew.-% eines hydrierten oder unhydrierten Styrol-Butadien-Blockcopolymeren.

Die erfindungsgemäßen thermoplastischen Partikelschaumstoffe können durch ein Verfahren erhalten werden, bei dem man
a) eine Polymermischungen mit einer kontinuierlichen und einer dispersen Phase durch Mischen zweier unverträglicher thermoplastischer Polymeren und gegebenenfalls einem Verträglichkeitsvermittler herstellt,
b) diese Mischungen mit einem Treibmittel imprägniert und zu expandierbaren thermoplastischen Polymerpartikel granuliert,
c) die expandierbaren, thermoplastischen Polymerpartikel zu Schaumstoffpartikeln vorschäumt, und
d) die vorgeschäumten Schaumstoffpartikel in einer Form mit Heißluft oder Wasserdampf bei einem Verarbeitungsdruck, der so niedrig gewählt wird, dass die nanozelluläre oder faserförmige Struktur in den Zellmembranen erhalten bleibt und üblicherweise im Bereich von 1,5 bis 2,3 bar liegt, zu Partikelschaumstoffformteilen verschweißt.

In einer weiteren Ausführungsform kann in Stufe b) die Polymermischung auch zuerst granuliert und die Granulate anschließend in wässriger Phase unter Druck und erhöhter Temperatur mit einem Treibmittel zu expandierbaren thermoplastischen Polymerpartikel nachimprägniert werden. Diese können anschließend nach Abkühlen unter die Schmelzetemperatur der Polymermatrix isoliert oder direkt durch Druckentspannung als vorgeschäumten Schaumstoffpartikeln (Stufe c) erhalten werden.

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische und bikontinuierliche Morphologien, die eine starke Verwandtschaft mit lyotropen Phasen aufweisen.

Die Polymermischung mit einer kontinuierlichen und einer dispersen Phase kann durch Mischen von zwei unverträglichen thermoplastischen Polymeren, beispielsweise in einem Extruder, hergestellt werden.

Die Polymermischung enthält bevorzugt 45 bis 98,9 Gew.-%, besonders bevorzugt 55 bis 89,9 Gew.-% eines thermoplastischen Polymeren A), insbesondere Styrolpolymeren wie Standard (GPPS)- oder Schlagzähpolystyrol (HIPS) oder Styrol-Acrylnitril-Copolymere (SAN) oder Acrylnitril-Butadien-Styrol-Copolymere (ABS). Besonders bevorzugt werden Standard-Polystyroltypen mit gewichtsmittleren Molekulargewichten im Bereich von 120.000 bis 300.000 g/mol und einer Schmelzevolumenrate MVR (200°C/5 kg) nach ISO 113 im Bereich von 1 bis 10 cm³/10 min, beispielsweise PS 158 K, 168 N oder 148 G der BASF Aktiengesellschaft. Zur Verbesserung der Verschweißung der Schaumstoffpartikel bei der Verarbeitung zum Formteil können leichtfließende Typen, beispielsweise Empera® 156L (Innovene) zugesetzt werden

Als weitere Komponente B) enthält die Polymermischung bevorzugt 1 bis 45 Gewichtsprozent, insbesondere 4 bis 37 Gew.-% eines mit dem thermoplastischen Polymeren A) unverträgliches, ebenfalls thermoplastischen Polymeren B). Als Polymer B) wird bevorzugt ein Polyolefin, z. B. Homo- oder Copolymerer von Ethylen und/oder Propylen, insbesondere Polyethylen verwendet, insbesondere wenn als Polymer A) ein Styrolpolymer eingesetzt wird. Als Polypropylene kommen insbesondere Spritzgusstypen, wie Adstif® RA 748 T oder Schlagzähtypen wie Clyrell® EM 2484 der Firma Basell in Betracht. Als Polyethylene kommen kommerziell erhältliche Homopolymere aus Ethylen, wie PE-LD (Spritzgusstypen), -LLD, -HD, oder Copolymere aus Ethylen und Propylen (z. B Moplen® RP220 und Moplen® RP320 der Basell), Ethylen und Okten (Engage®) oder Ethylen und Vinylacetat (EVA), Polyethylenacrylate (EA), wie Surlyn®-Typen 1901 und 2601 von DuPont oder Ethylen-Butylen-Acrylate (EBA) wie Lucofin® 1400 HN, 1400 HM von Lucobit AG in Frage. Der Schmelzevolumenindex MVI (190°C/2,16 kg) der Polyethylene liegt üblicherweise im Bereich von 0,5 bis 40 g/10 min, die Dichte im Bereich von 0,86 bis 0,97 g/cm³, bevorzugt im Bereich von 0,91 bis 0,95 g/cm³. Außerdem können Abmischungen mit Polyisobuten (PIB)(z. B. Oppanol® B150 der BASF Aktengesellschaft) eingesetzt werden.

Mit geringerem Anteil an Polyolefin nimmt das Treibmittelhaltevermögen deutlich zu. Damit werden die Lagerfähigkeit und die Verarbeitbarkeit der expandierbaren, thermoplastischen Polymerpartikel deutlich verbessert. Im Bereich von 4 bis 20 Gew.-% Polyolefin als Polymer B) erhält man expandierbare thermoplastische Polymerpartikel mit langer Lagerfähigkeit, ohne dass sich die elastischen Eigenschaften des daraus hergestellten Partikelschaumstoffs verschlechtern. Dies zeigt sich beispielsweise in einem geringern Verformungsrest εᵣₑₛₜ im Bereich von 25 bis 35 %.

Zur gezielten Einstellung der gewünschten Morphologie werden üblicherweise Verträglichkeitsvermittler (Komponente C) in Mengen von 0,1 bis 10 Gew.-%, bevorzugt 3 bis 8 Gew.-%, bezogen auf die Polymermatrix, eingesetzt.

Der Verträglichkeitsvermittler führt zu einer verbesserten Haftung zwischen der Polyolefin-reichen und der Polystyrol-reichen Phase und verbessert die Elastizität des Schaumstoffs schon in geringen Mengen deutlich gegenüber herkömmlichen EPS-Schaumstoffen. Untersuchungen zur Domänengröße der Polyolefin-reichen Phase zeigten, dass der Verträglichkeitsvermittler durch Reduktion der Grenzuflächenspannung kleine Tröpfchen stabilisiert. Die elektronenmikroskopische Aufnahme eines Schnittes durch ein treibmittelhaltiges, expandierbares Polystyrol/Polyethylen zeigt disperse Polyethylendomänen in der Polystyrolmatrix.

Hierfür eignen sich beispielsweise hydrierte oder unhydrierte Styrol-Butadien- oder Styrol-Isopren-Blockcopolymere. Der Gesamtdiengehalt liegt bevorzugt im Bereich von 20 bis 60 Gew.-%, besonders bevorzugt im Bereich von 30 bis 50 Gew.-%, der Gesamtstyrolgehalt liegt entsprechend bevorzugt im Bereich von 40 bis 80 Gew.-%, besonders bevorzugt im Bereich von 50 bis 70 Gew.-%.

Geeignete Styrol-Butadien-Blockcopolymere, welche aus mindestens zwei Polystyrolblöcken S und mindestens einem Styrol-Butadien-Copolymer-Block S/B bestehen, sind beispielsweise sternförmig verzweigte Blockcopolymere, wie sie in EP-A 0654488 beschrieben sind.

Des Weiteren eignen sich Blockcopolymere mit mindestens zwei Hartblöcken S₁ und S₂ aus vinylaromatischen Monomeren mit mindestens einem dazwischen liegenden statistischen Weichblock B/S aus vinylaromatischen Monomeren und Dien, wobei der Anteil der Hartblöcke über 40 Gew.-%, bezogen auf das gesamte Blockcopolymer beträgt und der 1,2-Vinylgehalt im Weichblock B/S unter 20 % beträgt, wie sie in WO 00/58380 beschrieben sind.

Als Verträglichkeitsvermittler sind auch lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}, geeignet. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97140079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 bis 16 %.

Als Verträglichkeitsvermittler werden bevorzugt Styrol-Butadien-Styrol (SBS) Dreiblockcopolymere mit einem Butadiengehalt von 20 bis 60 Gew.-%, bevorzugt 30 bis 50 Gew.-%, welche hydriert oder nicht hydriert sein können, verwendet. Diese sind beispielsweise unter der Bezeichnung Styroflex® 2G66, Styrolux® 3G55, Styroclear® GH62, Kraton® D 1101, Kraton® G 1650, Kraton® D 1155, Tuftec® H1043 oder Europren® SOL 6414 im Handel. Dabei handelt es sich um SBS-Blockcopolymere mit scharfen Übergängen zwischen B- und S-Blöcken. Eine Verbesserung der Verträglichkeit kann zusätzlich durch Hydrieren der Butadienblöcke erreicht werden, z. B. Kraton® G Typen.

Des weiteren können der mehrphasigen Polymermischung Additive, Keimbildner, Weichmacher, Flammschutzmittel, lösliche und unlösliche anorganische und/oder organische Farbstoffe und Pigmente, Füllstoffe oder Cotreibmittel in Mengen zugesetzt werden, die die Domänenbildung und daraus resultierende Schaumstoffstruktur nicht beeinträchtigen.

Als Keimbildner oder Nukleierungsmittel können beispielsweise Polyolefinwachse oder Talkum zusätzlich in Mengen von 0 bis 5, bevorzugt 0,5 bis 3 Gew.-%, bezogen auf die Polymeren A) bis C) gegeben werden.

Als Treibmittel (Komponente D) wird in Stufe b) bevorzugt 1 bis 15 Gewichtsprozent, bevorzugt 3 bis 10 Gewichtsprozent, bezogen auf die Polymermischung A) bis C), eines physikalischen Treibmittels, wie aliphatischen C₃ bis C₈-Kohlenwasserstoffen, Alkoholen, Ketonen, Ethern oder halogenierten Kohlenwasserstoffen eingesetzt. Bevorzugt wird iso-Butan, n-Butan, iso-Pentan, n-Pentan oder iso-Hexan eingesetzt.

Geeignete Cotreibmittel sind solche mit einer geringeren Selektivität der Löslichkeit für die Domänen bildenden Phase, beispielsweise Gase wie CO₂, N₂, Fluorkohlenwasserstoffe oder Edelgase. Diese werden bevorzugt in Mengen von 0 bis 10 Gew.-%, bezogen auf die Polymermischung, eingesetzt.

Besonders bevorzugt wird ein kontinuierliches Verfahren, bei dem die Stufe a) ein thermoplastisches, die kontinuierliche Phase bildenden Polymer A), beispielsweise Polystyrol, in einem Zweiwellen-Extruder aufgeschmolzen und zur Bildung der Polymermischung mit einem die disperse Phase bildenden Polymer B) und gegebenenfalls Verträglichkeitsvermittler C) vermischt wird und anschließend die Polymerschmelze in Stufe b) durch eine oder mehrere statische und/oder dynamischen Mischelemente gefördert und mit dem Treibmittel imprägniert wird. Die treibmittelbeladene Schmelze kann anschließend durch eine entsprechende Düse zu Schaumstoffplatten, -strängen oder -Partikeln extrudiert und geschnitten werden.

Mittels Unterwassergranulierung (UWG) kann die aus der Düse austretende Schmelze auch direkt zu expandierbaren oder gezielt angeschäumten Polymerpartikeln geschnitten werden. Die Einstellung des geeigneten Gegendrucks und einer geeigneten Temperatur im Wasserbad des UWG ermöglicht somit eine gezielte Herstellung von Schaumstoffpartikeln zu ermöglichen.

Zur Herstellung der expandierbaren Polymerpartikel wird die Unterwassergranulierung in der Regel bei Drücken im Bereich von 1,5 bis 10 bar durchgeführt. Die Düsenplatte weist in der Regel mehrere Nester mit mehreren Löchern auf. Bei einem Lochdurchmesser im Bereich von 0,2 bis 1 mm erhält man expandierbare Polymerpartikel mit der bevorzugten mittleren Partikeldurchmesser im Bereich von 0,5 bis 1,5 mm.0,8 mm. Expandierbare Polymerpartikel mit enger Partikelgrößenverteilung und einem mittleren Partikeldurchmesser im Bereich von 0,6 bis 0,8 mm führen zu einer besseren Ausfüllung des Formteilautomaten mit filigranere Formteilgestaltung. Des Weiteren wird dadurch eine bessere Formteiloberfläche erreicht mit weniger Zwickelvolumen.

Bevorzugt werden die erhaltenen runden oder ovalen Partikel auf einen Durchmesser im Bereich von 0,2 bis 10 mm aufgeschäumt. Ihre Schüttdichte liegt vorzugsweise im Bereich von 10 bis 100 g/l.

Der mittlere Durchmesser der dispersen Phase der in Stufe a) hergestellten Polymermischung liegt bevorzugt im Bereich von 1 bis 2000 nm, besonders bevorzugt im Bereich von 100 bis 1500 nm.

Eine bevorzugte Polymermischungen in Stufe a) wird durch Mischen von
A) 45 bis 98,9 Gewichtsprozent, insbesondere 55 bis 89,9 Gew.-% eines Styrolpolymeren, insbesondere Polystyrol,
B) 1 bis 45 Gewichtsprozent, insbesondere 4 bis 37 Gew.-% eines Polyolefins, insbesondere Polyethylen und
C) 0,1 bis 10 Gewichtsprozent, insbesondere 3 bis 8 Gew.-% eines hydrierten oder unhydrierten Styrol-Butadien-Blockcopolymeren hergestellt.

Gegenstand der Erfindung sind auch die in Stufe b) als Zwischenprodukte erhältlichen expandierbaren, thermoplastischen Polymerpartikel, die eine Polymermatrix enthalten aus
A) 45 bis 98,9 Gewichtsprozent, insbesondere 55 bis 89,9Gew.-% eines Styrolpolymeren, insbesondere Polystyrol,
B) 1 bis 45 Gewichtsprozent, insbesondere 4 bis 37 Gew.-% eines Polyolefins, insbeondere Polyethylen und
C) 0,1 bis 10 Gewichtsprozent, insbesondere 1 bis 8 Gew.-% eines hydrierten oder unhydrierten Styrol-Butadien-Blockcopolymeren, wobei die Summe aus A) bis C) 100 Gew.-% ergibt, und zusätzlich
D) 1 bis 15 Gewichtsprozent, insbesondere 3 bis 10 Gew.-%, bezogen auf die Polymermatrix, eines Treibmittels,
E) 0 bis 5, vorzugsweise 0,3 bis 3 Gew.-% eines Nukleierungsmittels.

Zur Verbesserung der Verarbeitbarkeit können die fertigen expandierbaren thermoplastischen Polymerpartikel durch Glycerinester, Antistatika oder Antiverklebungsmittel beschichtet werden.

Die Verschweißung der vorgeschäumten Schaumstoffperlen zum Formteil und die daraus resultierenden mechanischen Eigenschaften werden insbesondere durch Beschichtung der expandierbaren thermoplastischen Polymerpartikel mit einem Glycerinstearat verbessert. Besonders bevorzugt wird eine Beschichtung aus 50 bis 100 Gew.-% Glycerintristearat (GTS), 0 bis 50 Gew.-% Glycerinmonostearat (GMS) und 0 bis 20 Gew.-% Kieselsäure verwendet.

Die erfindungsgemäßen expandierbaren, thermoplastischen Polymerpartikel können mittels Heißluft oder Wasserdampf zu Schaumpartikeln mit einer Dichte im Bereich von 8 bis 200 kg/m³, bevorzugt im Bereich von 10 bis 50 kg/m³ vorgeschäumt und anschließend in einer geschlossenen Form zu Schaumstoffformkörpern verschweißt werden.

### Beispiele

### Einsatzstoffe:

### Komponente A: Polystyrol PS 158K der BASF SE

### Komponente B: Polyethylen

B1: PE-LLD (LL1201 XV, Exxon Mobile, Dichte 0,925 g/L, MVI = 0,7 g/10 min, Schmelzpunkt 123°C)
B2: PE-LLD (LL1001 XV, Exxon Mobile, Dichte 0,918 g/L, MVI = 1,0 g/10 min, Schmelzpunkt 120°C))

### Komponente C:

C: Styrolux® 3G55, Styrol-Butadien-Blockcopolymer der BASF SE,

### Komponente D: Treibmittel: Pentan S (20% iso-Pentan, 80% n-Pentan)

### Nukleierungsmittel: Talkum (HP 320, Omyacarb)

### Beispiel 1

In einem Zweischneckenextruder der Firma Leitritz ZSK 18 wurden 22 Gew. % PE-LLD (LL1201 XV, Exxon Mobile) mit 69,6 Gew. % Polystyrol (PS 158K, BASF) und 4 Gew. % SBS-Blockcopolymer (Styrolux® 3G55, BASF) bei 220-240°C aufgeschmolzen. Anschließend wurde die Polymerschmelze mit 8 Gew. % s-Pentan, bezogen auf die Polymermatrix, beladen. Danach wurde die Polymerschmelze in zwei statischen Mischern homogenisiert und auf 180°C abgekühlt. Zu dem treibmittelbeladenen Hauptschmelzestrom wurde über einen Seitenextruder 2,2 Gew. % Talkum (HP 320, Omyacarb), bezogen auf die Polymermatrix, als Nukleierungsmittel in Form eines Batches mit 2,2 Gew.-% Polystyrol PS 158 K zugegeben. Nach Homogenisierung über zwei weitere statische Mischer wurde die Schmelze durch eine beheizte Lochplatte extrudiert (4 Löcher mit 0,65 mm Bohrung und 280°C Lochplattentemperatur). Der Polymerstrang wurde mittels Unterwassergranulierung abgeschlagen (12 bar Unterwasserdruck, 45°C Wassertemperatur), so dass ein treibmittelbeladenes Minigranulat mit enger Teilchengrößenverteilung (d'= 1,2 mm) erhalten wurde.

Das treibmittelhaltige Granulat wurde in einem EPS-Vorschäumer zu Schaumperlen geringer Dichte (15-25 g/L vorgeschäumt) und in einem EPS-Formteilautomaten bei einem Überdruck von 0,7 - 1,1 bar zu Formteilen verarbeitet.

### Beispiele 2 und 3 und Vergleichsversuch

Analog Beispiel 1 wurden expandierbare Thermoplastmischungen mit der in Tabelle 1 angegebenen Zusammensetzung in Gewichtsanteilen hergestellt. Die Dichte und Zellzahl der Schaumstoffpartikel nach dem vorschäumen sind in Tabelle 2 zusammengestellt.

Der Treibmittelgehalt des Minigranulats (Gew.-%) wurde sofort nach der Herstellung und nach 7 Tagen Lagerung auf Filterpapier bei Raumtemperatur und Atmosphärendruck mittels GC-Analyse bestimmt.

An den Formteilen wurden verschiedene mechanische Messungen durchgeführt um die Elastifizierung des Schaumstoffs nachzuweisen. Tabelle 3 zeigt den Verformungsrest εᵣₑₛₜ der Schaumstoffformteile, ermittelt aus der Einfachhysterese bei 75% Stauchung (Vorschub 5mm/min) nach ISO 3386-1. Der Verformungsrest εᵣₑₛₜ ist der prozentuale Anteil nach 75% Stauchung, der zur Ursprungshöhe des gestauchten Körpers fehlt. Bei den erfindungsgemäßen Beispielen wird im Vergleich zum reinen EPS eine deutliche Elastifizierung beobachtet, die an dem sehr hohen Rückstellungsvermögen erkennbar ist.

In der transmissionselektronenmikroskopischen Aufnahme (TEM) ist die Zellstruktur (Figur 1) mit nanozellulären Zellwänden und Stegen (Figur 2) zu erkennen, die zu der Elastifizierung beitragen. Die Poren liegen dabei in der Größenordnung von 200 bis 500 nm und entsprechen der PE-Domänen des treibmittelbeladenen Minigranulats.

**Tabelle 1: Zusammensetzung der expandierbaren Thermoplastmischungen (Gewichtsanteile)**

| | V | Beisp.1 | Beisp. 2 | Beisp. 3 |
|---|---|---|---|---|
| PS 158K | 97,8 | 71,8 | 59,8 | 46,8 |
| PE | | 22 | 33 | 44 |
| 3G55 | | 4 | 6 | 8 |
| Talkum | 2,2 | 2,2 | 2,2 | 2,2 |
| Treibmittelgehalt (s-Pentan) | 6,8 | 6,5 | 6,5 | 8,2 |
| Treibmittelgehalt (s-Pentan) nach 7 Tagen | 5,7 | 4,8 | 4 | 3 |

**Tabelle 2: Eigenschaften der Schaumstoffpartikel**

| | V | Beisp.1 | Beisp. 2 | Beisp. 3 |
|---|---|---|---|---|
| Dichte [kg/m³] | 18 | 18 | 23 | 26 |
| Zellzahl [1/mm] | 11,6 | 4,5 | 6,0 | 6,8 |

**Tabelle 3: Verformungsrest εᵣₑₛₜ der Schaumstoffformteile bei 75% Stauchung**

| Verarbeitungsdruck | V | Beisp.1 | Beisp. 2 | Beisp. 3 |
|---|---|---|---|---|
| 0,8 bar | 60 | 23 | 32 | |
| 0,9 bar | 59 | 26 | 33 | |
| 1,0 bar | 58 | 28 | 49 | |
| 1,1 bar | 60 | 60 | 55 | 55 |
| | | | | |

### Beispiele 4 und 5

Zur Verbesserung der Verschweißung der Schaumstoffpartikel, wurde auf die Oberfläche des treibmittelhaltigen Granulates aus Beispiel 1 in einem Lödige-Mischer 0,3 Gew. % eines Beschichtungsmittels aufgetrommelt. Nach einer Einwirkzeit von 4 Stunden wurde das beschichtete, treibmittelhaltige Granulat wie in Beispiel 1 vorgeschäumt und zu Formteilen verschweißt.

Als Beschichtungskomponenten wurden für Beispiel 4 Glycerintristearat (GTS) und für Beispiel 5 eine Mischung aus 60 Gew.-% GTS, 30 Gew.-% Glycerinmonostearat (GMS) und 10 Gew.-% Kieselsäure verwendet. Das Beschichtungsmittel hatte einen positiven Effekt auf die Verschweißung der vorgeschäumten Schaumstoffperlen zum Formteil. Die Biegefestigkeit der nach Beispiel 4 und 5 erhaltenen Formteile konnte auf 220 bzw. 227 KPa gegenüber 150 kPa der aus den unbeschichteten Granulaten nach Beispiel 1 erhaltenen Formteile, erhöht werden.

### Beispiele 6 bis 12

In einem Zweischneckenextruder der Firma Leitritz ZSK 18 wurden die Komponenten A bis C bei 220-240°C / 130 bar aufgeschmolzen. Anschließend wurde in die Polymerschmelze 8 Gewichtsanteile Pentan S (20% iso-Pentan, 80% n-Pentan) als Treibmittel gedrückt und über zwei statische Mischer homogen in die Polymerschmelze eingearbeitet. Danach wurde über einen Kühler die Temperatur auf 180° - 185°C reduziert. Zu dem treibmittelbeladenen Hauptschmelzestrom wurde über einen Seitenextruder 2,2 Gewichtsanteile Talkum (HP 320, Omyacarb) als Nukleierungsmittel in Form eines 50 Gew.-%igen Polystyrol-Batches zudosiert. Nach Homogenisierung über zwei weitere statische Mischer wurde die Schmelze mit 4 kg/h durch eine beheizte Lochplatte extrudiert (4 Löcher mit 0,65 mm Bohrung und 280°C Lochplattentemperatur). Der Polymerstrang wurde mittels Unterwassergranulierung abgeschlagen (12 bar Unterwasserdruck, 45°C Wassertemperatur), so dass ein treibmittelbeladenes Minigranulat mit enger Teilchengrößenverteilung (d'= 1,1 mm) erhalten wurde. Die Gewichtsanteile der Komponenten A bis C) sind in Tabelle 4 zusammengestellt.

### Beispiele 13:

In einem Zweischneckenextruder der Firma Leitritz ZE 40 wurden die Komponenten A bis C bei 240 - 260°C / 140 bar aufgeschmolzen und mit 2,2 Gewichtsanteilen Talkum (HP 320, Omyacarb) als Nukleierungsmittel versetzt. Anschließend wurde in die Polymermelze mit 8 Gewichtsanteilen Pentan S (20% iso-Pentan, 80% n-Pentan) als Treibmittel gedrückt und über zwei statische Mischer homogen in die Polymerschmelze eingearbeitet. Danach wurde über einen Kühler die Temperatur auf 180°-195°C reduziert. Nach weiterer Homogenisierung über zwei weitere statische Mischer, wurde die Polymerschmelze mit 50 kg/h durch eine auf 240 - 260°C temperierte Lochplatte bei 200 - 220 bar gedrückt (0,6 mm Lochdurchmesser mit 7 Nester x 7 Löcher oder 0,4 mm Lochdurchmesser mit 7 Nester x 10 Löcher). Der Polymerstrang wurde mittels Unterwassergranulierung abgeschlagen (11-10 bar Unterwasserdruck bei 40°C-50°C Wassertemperatur), so dass ein treibmittelbeladenes Minigranulat mit enger Teilchengrößenverteilung (d'= 1,1 mm bei 0,6 mm Lochdurchmesser und 0,8 mm bei 0,4 mm Lochdurchmesser) erhalten wurde. Die Gewichtsanteile der Komponenten A bis C) sind in Tabelle 4 zusammengestellt.

Das treibmittelhaltige Granulat wurde in einem EPS-Vorschäumer zu Schaumstoffperlen geringer Dichte (15-25 g/L vorgeschäumt) und in einem EPS-Formteilautomaten bei einem Überdruck von 0,7 - 1,1 bar zu Formteilen verarbeitet.

An den Formteilen wurden verschiedene mechanische Messungen durchgeführt um die Elastifizierung des Schaumstoffs nachzuweisen. Tabelle 4 zeigt den Verformungsrest εᵣₑₛₜ der Schaumstoffformteile, ermittelt aus der Einfachhysterese bei 75% Stauchung (Vorschub 5mm/min) nach ISO 3386-1. Der Verformungsrest εᵣₑₛₜ ist der prozentuale Anteil nach 75% Stauchung, der zur Ursprungshöhe des gestauchten Körpers fehlt. Bei den erfindungsgemäßen Beispielen wird im Vergleich zum reinen EPS eine deutliche Elastifizierung beobachtet, die an dem sehr hohen Rückstellungvermögen erkennbar ist.

In der transmissionselektronenmikroskopischen Aufnahme (TEM) ist die disperse Verteilung des Polyethylens im treibmittelhaltigen Minigranulat zu erkennen, die nach dem Verschäumen zur Elastifizierung im Schaumstoff beitragen. Die PE-Domänen des des treibmittelbeladenen Minigranulats liegen dabei in der Größenordnung von 200 bis 1000 nm.

Als Beschichtungskomponenten wurde 70 Gew.-% Gycerintristearat (GTS) und 30 Gew.-% Glycerinmonostearat (GMS) verwendet. Das Beschichtungsmittel hatte einen positiven Effekt auf die Verschweißung der vorgeschäumten Schaumstoffperlen zum Formteil. Die Biegefestigkeit auf 250 bzw. 310 KPa gegenüber 150 kPa der aus den unbeschichteten Granulaten erhaltenen Formteile, erhöht werden.

Die kleinen Partikelgrößen 0,8 mm zeigten eine Verbesserung bei der Verarbeitbarkeit zum Formteil bezüglich Entformzeiten und Füllverhalten des Werkzeugs. Zusätzlich wurde die Formteiloberfläche homogener als bei Partikeln mit 1,1 mm Durchmesser.

**Tabelle 4: Zusammensetzung der expandierbaren Polymerpartikel (EPS) in Gewichtsanteilen und Eigenschaften der Schaumstoffformteile**

| | Beispiel | 6 | 7 | 8 | 9 | 10 | 11 | 12 | 13 |
|---|---|---|---|---|---|---|---|---|---|
| Zusammensetzung der expandierbaren Partikel | | | | | | | | | |
| | Komponente A) | 48 | 61 | 74 | 76,9 | 89,2 | 93 | 95,2 | 76,9 |
| | Komponente B1) | 44 | 33 | 22 | 19,6 | 9,1 | 6,2 | 4,1 | |
| | Komponente B2) | | | | | | | | 19,6 |
| | Komponente C) | 8 | 6 | 4 | 3,5 | 1,7 | 1 | 0,8 | 3,5 |

| Eigenschaften des Schaumstoffformteils | | | | | | | | | |
|---|---|---|---|---|---|---|---|---|---|
| | Schaumstoffdichte [g/L] | 27,5 | 25,3 | 20,2 | 20,0 | 19,9 | 20,1 | 20,4 | 20,1 |
| | Minimale Dichte [g/L] | 23,9 | 21,7 | 16,7 | 17,0 | 15,5 | 15,0 | 14,5 | 17,0 |
| | Druckfestigkeit 10% [kPa] | 84 | 97 | 97 | 96 | 98 | 93 | 93 | 91 |
| | Biegefestigkeit [kPa] | 180 | 230 | 223 | 261 | 230 | 226 | 236 | 296 |
| | Biegearbeit [Nm] | 2,1 | 5,8 | 3,4 | 3,9 | 3,7 | 3,2 | 2,8 | 4,0 |
| | Verformungsrest [%] | 55 | 44 | 28 | 30 | 31 | 28 | 29 | 31 |

## Patentansprüche

1. Thermoplastische Partikelschaumstoffe mit Zellen einer mittleren Zellgröße im Bereich von 20 bis 500 µm, **dadurch gekennzeichnet dass** die Zellmembranen eine nanozelluläre oder faserförmige Struktur mit Poren- bzw. Faserdurchmessern unter 1500 nm aufweisen.

2. Thermoplastische Partikelschaumstoffe nach Anspruch 1, **dadurch gekennzeichnet** das der mittlere Poren- bzw. Faserdurchmesser der nanozellulären oder faserförmigen Struktur im Bereich von 10 bis 1000 nm liegt

3. Thermoplastische Partikelschaumstoffe nach Anspruch 1 oder 2, **dadurch gekennzeichnet** das die Polymermatrix aus einer kontinuierlichen, Styrolpolymer-reichen Phase und einer dispersen Polyolefinen-reichen Phase besteht.

4. Thermoplastische Partikelschaumstoffe nach einem der Ansprüche 1 bis 3, **dadurch gekennzeichnet, dass** die Polymermatrix aus
A) 45 bis 98,9 Gewichtsprozent Styrolpolymer,
B) 1 bis 45 Gewichtsprozent Polyolefin und
C) 0,1 bis 10 Gewichtsprozent eines hydrierten oder unhydrierten Styrol-Butadien-Blockcopolymeren
besteht.

5. Verfahren zur Herstellung von thermoplastischen Partikelschaumstoffen nach einem der Ansprüche 1 bis 4, **dadurch gekennzeichnet, dass** man
a) eine Polymermischungen mit einer kontinuierlichen und einer dispersen Phase durch Mischen zweier unverträglicher thermoplastischen Polymeren herstellt,
b) diese Mischungen mit einem Treibmittel imprägniert und zu expandierbaren thermoplastischen Polymerpartikel granuliert,
c) die expandierbaren thermoplastischen Polymerpartikel zu Schaumstoffpartikeln vorschäumt, und
d) die vorgeschäumten Schaumstoffpartikel in einer Form mit Heißluft oder Wasserdampf bei einem Verarbeitungsdruck, der so niedrig gewählt wird, dass die nanozelluläre oder faserförmigen Struktur in den Zellmembranen erhalten bleibt, zu Partikelschaumstoffformteilen verschweißt.

6. Verfahren zur Herstellung von thermoplastischen Partikelschaumstoffen nach einem der Ansprüche 1 bis 4, **dadurch gekennzeichnet**en, dass man
a) eine Polymermischungen mit einer kontinuierlichen und einer dispersen Phase durch Mischen zweier unverträglicher thermoplastischen Polymeren hergestellt,
b) diese Mischungen granuliert und in wässriger Phase unter Druck und erhöhter Temperatur mit einem Treibmittel zu expandierbaren thermoplastischen Polymerpartikel nachimprägniert,
c) die expandierbaren thermoplastischen Polymerpartikel zu Schaumstoffpartikeln vorschäumt, und
d) die vorgeschäumten Schaumstoffpartikel in einer Form mit Heißluft oder Wasserdampf bei einem Verarbeitungsdruck, der so niedrig gewählt wird, dass die nanozelluläre oder faserförmigen Struktur in den Zellmembranen erhalten bleibt, zu Partikelschaumstoffformteilen verschweißt.

7. Verfahren nach Anspruch 5 oder 6, **dadurch gekennzeichnet, dass** der mittlere Durchmesser der dispersen Phase der Polymermischung im Bereich von 1 bis 1500 nm liegt.

8. Verfahren nach einem der Ansprüche 5 bis 7, **dadurch gekennzeichnet**en, dass die Polymermischungen in Stufe a) durch Mischen von
A) 45 bis 98,9 Gewichtsprozent Styrolpolymer,
B) 1 bis 45 Gewichtsprozent Polyolefin und
C) 0,1 bis 10 Gewichtsprozent eines hydrierten oder unhydrierten Styrol-Butadien-Blockcopolymeren herstellt wird.

9. Verfahren nach einem der Ansprüche 5 bis 8, **dadurch gekennzeichnet, dass** in Stufe b) 1 bis 10 Gewichtsprozent, bezogen auf die Polymermischung, eines C₃ bis C₈-Kohlenwasserstoffes als Treibmittel eingesetzt wird.

## Claims

1. A thermoplastic particle foam which has cells having a mean cell size in the range from 20 to 500 µm, wherein the cell membranes have a nanocellular or fibrous structure having pore or fiber diameters below 1500 nm.

2. The thermoplastic particle foam according to claim 1, wherein the mean pore or fiber diameter of the nanocellular or fibrous structure is in the range from 10 to 1000 nm.

3. The thermoplastic particle foam according to claim 1 or 2, wherein the polymer matrix comprises a continuous phase which is rich in styrene polymer and a disperse polyolefin-rich phase.

4. The thermoplastic particle foam according to any of claims 1 to 3, wherein the polymer matrix comprises
A) from 45 to 98.9 percent by weight of styrene polymer,
B) from 1 to 45 percent by weight of polyolefin and
C) from 0.1 to 10 percent by weight of a hydrogenated or unhydrogenated styrene-butadiene block copolymer.

5. A process for producing thermoplastic particle foams according to any of claims 1 to 4, which comprises
a) producing a polymer mixture having a continuous phase and a disperse phase by mixing two incompatible thermoplastic polymers,
b) impregnating this mixture with a blowing agent and pelletizing it to produce expandable thermoplastic polymer particles,
c) prefoaming the expandable, thermoplastic polymer particles to produce foam particles and
d) fusing the prefoamed foam particles in a mold by means of hot air or steam at a processing pressure which is kept sufficiently low for the nanocellular or fibrous structure in the cell membranes to be retained to produce particle foam moldings.

6. A process for producing thermoplastic particle foams according to any of claims 1 to 4, which comprises
a) producing a polymer mixture having a continuous phase and a disperse phase by mixing two incompatible thermoplastic polymers,
b) pelletizing this mixture and after-impregnating it with a blowing agent in an aqueous phase under superatmospheric pressure at elevated temperature to produce expandable thermoplastic polymer particles,
c) prefoaming the expandable, thermoplastic polymer particles to produce foam particles and
d) fusing the prefoamed foam particles in a mold by means of hot air or steam at a processing pressure which is kept sufficiently low for the nanocellular or fibrous structure in the cell membranes to be retained to produce particle foam moldings.

7. The process according to claim 5 or 6, wherein the mean diameter of the disperse phase of the polymer mixture is in the range from 1 to 1500 nm.

8. The process according to any of claims 5 to 7, wherein the polymer mixture is produced in step a) by mixing
A) from 45 to 98.9 percent by weight of styrene polymer,
B) from 1 to 45 percent by weight of polyolefin and
C) from 0.1 to 10 percent by weight of a hydrogenated or unhydrogenated styrene-butadiene block copolymer.

9. The process according to any of claims 5 to 8, wherein from 1 to 10 percent by weight, based on the polymer mixture, of a C₃-C₈-hydrocarbon is used as blowing agent in step b).

## Revendications

1. Mousses particulaires thermoplastiques à cellules d'une taille moyenne de cellule dans la plage de 20 à 500 µm, **caractérisées en ce que** les membranes cellulaires présentent une structure nanocellulaire ou fibreuse à diamètres de pores ou, respectivement, de fibres, inférieurs à 1 500 nm.

2. Mousses particulaires thermoplastiques selon la revendication 1, **caractérisées en ce que** le diamètre de pore ou, respectivement, de fibre de la structure nanocellulaire ou fibreuse se situe dans la plage de 10 à 1 000 nm.

3. Mousses particulaires thermoplastiques selon la revendication 1 ou 2, **caractérisées en ce que** la matrice polymère est constituée d'une phase continue riche en polymère de styrène et d'une phase dispersée riche en polyoléfine.

4. Mousses particulaires thermoplastiques selon l'une quelconque des revendications 1 à 3, **caractérisées en ce que** la matrice polymère est constituée de
A) 45 à 98,9 % en poids de polymère de styrène,
B) 1 à 45 % en poids de polyoléfine et
C) 0,1 à 10 % en poids d'un copolymère séquencé styrène/butadiène hydrogéné ou non hydrogéné.

5. Procédé pour la production de mousses particulaires thermoplastiques selon l'une quelconque des revendications 1 à 4, **caractérisé en ce que**
a) on prépare un mélange de polymères comportant une phase continue et une phase dispersée, par mélange de deux polymères thermoplastiques incompatibles,
b) on imprègne ce mélange avec un agent d'expansion et on le granule en particules de polymères thermoplastiques expansibles,
c) les particules de polymères thermoplastiques expansibles sont pré-expansées en particules de mousse, et
d) les particules de mousse pré-expansées sont soudées en pièces moulées de mousse particulaire dans un moule avec de l'air chaud ou de la vapeur d'eau, sous une pression de processus qui est choisie suffisamment basse pour que la structure nanocellulaire ou fibreuse soit maintenue dans les membranes cellulaires.

6. Procédé pour la production de mousses particulaires thermoplastiques selon l'une quelconque des revendications 1 à 4, **caractérisé en ce que**
a) on prépare un mélange de polymères comportant une phase continue et une phase dispersée, par mélange de deux polymères thermoplastiques incompatibles,
b) on granule ce mélange et on le post-imprègne avec un agent d'expansion, en phase aqueuse, sous pression et à température élevée, pour obtenir des particules de polymère thermoplastiques,
c) les particules de polymère thermoplastiques expansibles sont pré-expansées en particules de mousse, et
d) les particules de mousse pré-expansées sont soudées en pièces moulées de mousse particulaire dans un moule avec de l'air chaud ou de la vapeur d'eau, sous une pression de processus qui est choisie suffisamment basse pour que la structure nanocellulaire ou fibreuse soit maintenue dans les membranes cellulaires.

7. Procédé selon la revendication 5 ou 6, **caractérisé en ce que** le diamètre moyen de la phase dispersée du mélange de polymères se situe dans la plage de 1 à 1 500 nm.

8. Procédé selon l'une quelconque des revendications 5 à 7, **caractérisé en ce qu'**on prépare les mélanges de polymères dans l'étape a) par mélange de
A) 45 à 98,9 % en poids de polymère de styrène,
B) 1 à 45 % en poids de polyoléfine et
C) 0,1 à 10 % en poids d'un copolymère séquencé styrène/butadiène hydrogéné ou non hydrogéné.

9. Procédé selon l'une quelconque des revendications 5 à 8, **caractérisé en ce que** dans l'étape b) on utilise de 1 à 10 % en poids, par rapport au mélange de polymères, d'un hydrocarbure en C₃-C₈ en tant qu'agent d'expansion.
